# EUROPÄISCHE PATENTSCHRIFT

(11) **EP 1 135 636 B1**
(45) Veröffentlichungstag und Bekanntmachung des Hinweises auf die Patenterteilung: **26.06.2002**
(21) Anmeldenummer: 99958145.7
(22) Anmeldetag: 01.12.1999
(51) Int. Cl.: F16H 61/04, B60K 41/06

(54) **VERFAHREN ZUM STEUERN EINES AUTOMATGETRIEBES**
METHOD FOR CONTROLLING AN AUTOMATIC TRANSMISSION
PROCEDE POUR COMMANDER UNE TRANSMISSION AUTOMATIQUE

(30) Priorität: 07.12.1998 DE 19856320
(43) Veröffentlichungstag der Anmeldung: 26.09.2001
(73) Patentinhaber: ZF FRIEDRICHSHAFEN Aktiengesellschaft, 88038 Friedrichshafen (DE)
(72) Erfinder: DREIBHOLZ, Ralf, D-88074 Meckenbeuren (DE); VOHMANN, Martin, D-73730 Esslingen (DE); FROTSCHER, Gerd, D-88048 Friedrichshafen (DE)
(86) Internationale Anmeldenummer: EP9909322
(87) Internationale Veröffentlichungsnummer: WO0034691

(56) Entgegenhaltungen:
- WO-A-91/13780
- DE-A- 4 424 456
- DE-A- 19 611 839
- US-A- 5 383 824
- US-A- 5 562 567

## Beschreibung

Die Erfindung betrifft ein Verfahren zum Steuern eines von einer Brennkraftmaschine angetriebenen Automatgetriebes, bei dem eine Schaltung von einem ersten in ein zweites Übersetzungsverhältnis als eine Zug-Hochschaltung erfolgt. Dabei wird eine erste Kupplung geöffnet und eine zweite geschlossen und ein elektronisches Getriebe-Steuergerät steuert über elektromagnetische Ventile den Druckverlauf der ersten und der zweiten Kupplung während des Schaltvorgangs. Dieser besteht im einzelnen aus einer Schnellfüll-, einer Füllausgleichs-, einer Lastübernahme-, einer Gradient-Einstell-, einer Gleit-, einer Gradient-Abbau- und einer Schließphase.

Ein derartiges Verfahren ist aus der Offenlegung DE 44 24 456 A1 der Anmelderin bereits bekannt, die hiermit durch ausdrückliche Bezugnahme in den Offenbarungsgehalt der vorliegenden Patentanmeldung aufgenommen wird. In dieser Schrift wird insbesondere die Anwendung dieses Verfahrens bei einem Gruppengetriebe vorgeschlagen.

Aus dem Stand der Technik ("Der Motoreingriff" - ein neues Element der elektronischen Getriebesteuerung von Manfred Schwab und Alfred Müller, Bosch, Technische Berichte 7, 1983, Seiten 166 bis 174) ist es allgemein bekannt, einen Motoreingriff während eines Schaltvorgangs durchzuführen, wobei durch einen zeitlich exakt gesteuerten Verlauf des Motormoments während der Schaltvorgänge eines automatischen Getriebes die Getriebe-Steuerung im Hinblick auf Schaltkomfort, Lebensdauer der Reibelemente und auf die übertragbare Leistung des Getriebes optimiert werden kann. Unter einem Motoreingriff sind dabei alle Maßnahmen zu verstehen, die es gestatten, während eines Schaltvorgangs im Getriebe das durch den Verbrennungsvorgang erzeugte Motormoment gezielt zu beeinflussen, insbesondere zu reduzieren. Aufgrund der strengen Anforderung des Gesetzgebers an die Reaktionszeit und den zeitlichen Ablauf der Steuerung bei einer Gesamtdauer des Eingriffs von nur etwa 500 ms ist eine präzise, zeitliche Abstimmung der Schaltvorgänge erforderlich. Ein Motoreingriff läßt sich sowohl bei Hochschaltungen als auch bei Rückschaltungen anwenden. Primäres Ziel des Motoreingriffs bei Hochschaltungen ist es, die während des Schaltvorgangs in den Reibelementen erzeugte Verlustenergie zu verringern, indem während des Synchronisationsvorgangs das Motormoment reduziert wird, ohne die Zugkraft zu unterbrechen. Der hierdurch gewonnene Spielraum kann genutzt werden zur Erhöhung der Lebensdauer der Reibpartner durch Schleifzeitverkürzung.

Aus der DE 42 09 091 A1 ist ferner ein Verfahren zur Reduzierung des Motormoments bei einem Gangwechsel in einem Kraftfahrzeug bekannt. Dabei wird das Drehenergiemoment, das durch zu verzögernde oder zu beschleunigende, rotierende Massen bei einer gangwechselbedingten Änderung der Motordrehwinkelgeschwindigkeit entsteht, berechnet und das Motormoment wird beim Einkuppeln des neuen Getriebegangs um den Betrag dieses Drehenergiemoments reduziert.

Bei der gattungsbildende US 5 562 567 A wird ein Motoreingrift während der Gradient-Einstell-, der Gleit-, der Gradient-Abbau- und der Schliessphasen durchgeführt, indem ein Motoreingriffsfaktor von dem Getriebesteuergerät an ein Motorsteuergerät abgegeben wird.

Verfahren der oben genannten Art unterliegen einer ständigen Weiterentwicklung im Hinblick auf einen optimalen Einsatz des Motoreingriffs bei möglichst geringer Belastung der Schaltelemente sowie einem optimalen Momentenverlauf unter Berücksichtigung der Vorgaben der Motoren-Hersteller, insbesondere bezüglich der Grenzen des maximal möglichen Motoreingriffs in bezug auf Gemisch- bzw. Abgasbedingungen.

Aufgabe der vorliegenden Erfindung ist es, einen optimierten Einsatz des Motoreingriffs anzugeben, welcher insbesondere einen minimalen Applikationsaufwand erfodert, d. h., daß beispielsweise bei einem analytischen Berechnungsverfahren möglichst wenige Parameter erforderlich sind.

Diese Aufgabe wird erfindungsgemäß mit den Merkmalen des Anspruchs 1 gelöst. Dadurch wird vorteilhafterweise erreicht, daß der im Getriebe eingestellte Druckverlauf der zweiten, schließenden Kupplung und das daraus resultierende Reibmoment sowie das durch den Eingriffsfaktor erzeugte und vom Motor abgegebene Moment zeitlich optimal aufeinander abgestimmt sind, ohne daß aufwendige Applikationsparameter und -aufwand notwendig sind.

In einer Weiterbildung der Erfindung wird vorgeschlagen, daß man einen maximalen Motoreingriffsfaktor mdzegsomax berechnet aus einem maximalen dynamischen Moment M_DYN, einem statischen Moment ohne Motoreingriff M_STAT und einem maximal einstellbaren Motorkennfaktor KF_MDZ MAX.

Dieser maximale Motoreingriffsfaktor mdzegsomax wird berechnet als das Verhältnis aus dem dynamischen Motormoment M_DYN zu dem statischen Motormoment M_STAT. Dies gilt für den Fall, daß der so errechnete Wert kleiner ist als der maximal einstellbare Motorkennfaktor KF_MDZ MAX. Falls jedoch der so errechnete Wert größer ist als der maximal einstellbare Motorkennfaktor KF_MDZ MAX, dann entspricht der maximale Motoreingriffsfaktor mdzegsomax dem maximal einstellbaren Motorkennfaktor KF_MDZ MAX.

In einer besonderen Weiterbildung der Erfindung wird vorgeschlagen, daß man den Motoreingriffsfaktor mdzegs in der Gradient-Einstellphase GE beginnend über der Zeit linear steigert von einem Wert Null auf den Wert des maximalen Motoreingriffsfaktors mdzegsomax. In der sich daran anschließenden Gleitphase GL wird der Motoreingriffsfaktor mdzegs im wesentlichen konstant gehalten auf dem Wert mdzegsomax und in der sich daran anschließenden Gradienten-Abbauphase GA und Schließphase S wird der Motoreingriffsfaktor mdzegs reduziert von dem maximalen Motoreingriffsfaktor mdzegsomax auf den Wert Null.

Den Druck an der zweiten zu schließenden Kupplung P_K berechnet man vorteilhafterweise aus dem statischen Motormoment mit Motoreingriff M_STAT ME, dem dynamischen Motormoment M_DYN, einem Faktor F1 und einer Wandlerverstärkung WV sowie dem Absolutdruck P_ABS.

Das statische Motormoment mit Motoreingriff M_STAT ME wird dabei berechnet als das Produkt aus dem statischen Motormoment M_STAT mal der Summe von eins minus dem Motoreingriffsfaktor mdzegs.

Der Kupplungsdruck P_K zu Beginn des Motoreingriffs, nämlich zu Beginn der Phase GE, wird berechnet als die Summe aus dem Absolutdruck P_ABS und dem statischen Motordruck P_M STAT, welcher sich berechnet als Produkt aus dem Faktor F1 mal dem statischen Motormoment M_STAT mal der Wandlerverstärkung WV, wobei der Absolutdruck P_ABS der Druck ist, welcher zur Überwindung von Rückstellfederkräften und der Reibung am Betätigungskolben erforderlich ist.

Der Kupplungsdruck P_K während der Gleitphase GL berechnet sich als die Summe aus dem Absolutdruck P_ABS und dem Druck P_M STAT ME des statischen Motormoments mit Motoreingriff und dem Druck P_M DYN des dynamischen Motormoments, wobei der Druck P_M DYN berechnet wird als das Produkt aus dem Faktor F1 mal der Wandlerverstärkung WV mal dem dynamischen Motormoment M_DYN.

Erfindungsgemäß nimmt der Druck der zweiten schließenden Kupplung während der Zug-Hochschaltung folgenden Verlauf:
In der Schnellfüllphase SF wird die Kupplung mit hohem Druck beaufschlagt, in der Füllausgleichsphase FA auf einem niederen Druckniveau P_ABS befüllt und in der Lastübernahmephase LÜ wird der Druck auf einen Endwert P_ABS + P_M STAT erhöht. In der Gradient-Einstellphase GE wird der Druck vom Wert P_ABS + P_M STAT auf einen neuen Endwert P_ABS + P_M STAT ME + P_M DYN erhöht und in der Gleitphase GL konstant gehalten bis zum Erreichen eines Vorsynchronpunktes VSYNC. Danach schließt sich die Gradient-Abbauphase GA an, in welcher der Druck auf einen Endwert P_ABS + P_M STAT verringert wird und mit Erreichen dieses Endwertes beginnen die Schließphasen S1 und S2.

In einer Weiterbildung der Erfindung wird vorgeschlagen, daß man den Beginn des Motoreingriffs zur Synchronisierung mit dem Schaltdruckaufbau in den Phasen GE und GL über eine Zeitstufe verzögert, wenn die Reaktion des Motoreingriffs schneller ist als die Reaktion auf die Druckvorgaben. Dadurch wird vorteilhafterweise erreicht, daß das Abtriebsmoment nicht unnötigerweise reduziert wird.

In Umkehrung der vorgenannten Merkmale wird vorgeschlagen, daß man den Beginn des Schaltdruckaufbaus zur Synchronisierung mit dem Motoreingriff in den Phasen GE und GL über eine Zeitstufe verzögert, wenn die Reaktion des Motoreingriffs langsamer ist als die Reaktion auf Druckvorgaben. Dadurch wird vorteilhafterweise erreicht, daß unnötige Reibbelastungen an Schaltelementen vermieden werden.

In einer Weiterbildung der Erfindung wird das dynamische Motormoment M_DYN während der Gradient-Einstellphase GE von 0 auf 100 % gesteigert, in der Gleitphase GL verbleibt es bei 100 % und in der sich anschließenden Gradient-Abbauphase GA wird das dynamische Motormoment M_DYN von 100 % auf 0 wieder reduziert.

Der Motoreingriff wird im übrigen nur aktiviert, wenn die Motordrehzahl einen vorgebbaren Wert überschreitet, wodurch vorteilhafterweise ein Abwürgen des Motors verhindert wird.

Vorteilhafterweise ist der maximal mögliche Motoreingriffsfaktor mdzegsomax in einem Kennfeld in Abhängigkeit von Betriebsparametern, wie z. B. der Motordrehzahl, der Laststellung oder der Einspritzmenge oder des Motormoments oder der Luftmasse, abgespeichert.

Der maximal einstellbare Motorkennfaktor KF_MDZ MAX wird vom Motor-Steuergerät aktuell zurückgemeldet an das Getriebesteuergerät, wodurch eine schnelle Regelung des Motoreingriffsfaktors ermöglicht ist.

Weitere Ziele, Merkmale, Vorteile und Anwendungsmöglichkeiten der Erfindung ergeben sich aus der nachfolgenden Beschreibung des Ausführungsbeispiels, welches in den Figuren näher dargestellt ist. Dabei bilden alle beschriebenen und/oder bildlich dargestellten Merkmale für sich oder in beliebiger sinnvoller Kombination den Gegenstand der Erfindung, unabhängig von ihrer Zusammenfassung in ihren Ansprüchen und deren Rückbeziehung.
Es zeigen:
- Fig. 1: den Verlauf des Motoreingriffsfaktors mdzegs über der Zeit und
- Fig. 2: den Verlauf des Drucks P_K der zweiten schließenden Kupplung über der Zeit.

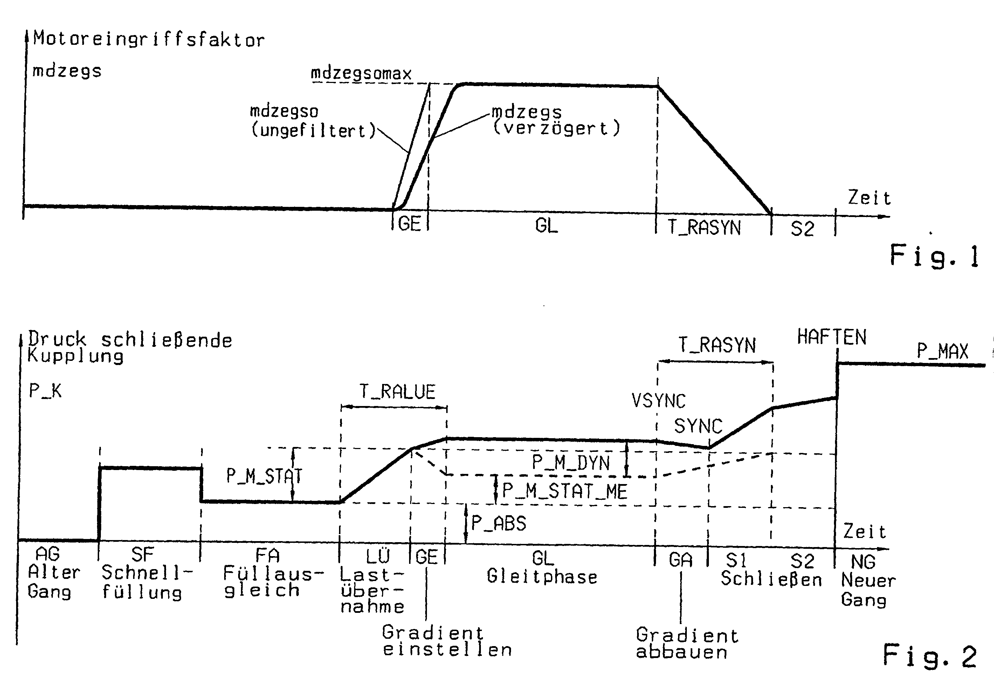

Der Motoreingriffsfaktor mdzegs (Fig. 1) startet zu Beginn der Gradient-Einstellphase GE von einem Wert Null entlang der Linie mdzegso linear auf den maximalen Motoreingriffsfaktor mdzegsomax. Dieser wird mit Ende der Gradient-Einstellphase GE erreicht. Anschließend bleibt dieser Wert während der Gleitphase GL konstant und wird zu Beginn der Gradient-Abbauphase GA bis zum Ende der Schließphase S1 linear reduziert bis auf den Wert Null.

Der Verlauf des Motoreingriffsfaktors mdzegs wird zeitlich verzögert und erfolgt mit einer gegenüber dem ungefilterten Verlauf mdzegso geänderten Steigung entlang der Linie mdzegs, wenn die Reaktion des Motoreingriffs schneller ist als die Reaktion auf die Druckvorgaben.

Der Verlauf des Drucks P_K für die zweite zu schließende Kupplung (Fig. 2) beginnt bei einem Druckwert Null, für den Zeitraum, in dem der alte Gang AG noch eingelegt ist. Daran schließt sich eine Schnellfüllphase SF an, in welcher die zur schließende Kupplung mit hohem Druck beaufschlagt wird. In der sich daran anschließenden Füllausgleichsphase FA erfolgt eine Befüllung der Kupplung mit einem Druck niederen Niveaus P_ABS, wobei dieser dem Druck entspricht, der zur Überwindung von Rückstellfederkräften und der Reibung am Betätigungskolben erfoderlich ist. Danach wird der Druck P_K linear angehoben auf einen Wert P_ABS + P_M STAT.

In der sich daran anschließenden Gradient-Einstellphase GE steigt der Verlauf des Druckes auf ein Druckniveau, welches einem Wert P_ABS + P_M STAT ME + P_M DYN entspricht. Dieser Wert wird konstant gehalten bis zum Ende der Gleitphase GL, wobei dieser Zeitpunkt dem Vorsynchronpunkt VSYNC entspricht, und anschließend in der Gradient-Abbauphase GA nahezu bis auf den zu Beginn der Gradient-Einstellphase GE bereits vorhandenen Druck P_ABS + P_M STAT wieder reduziert. Realerweise tritt der Synchronpunkt SYNC vor dem idealen Synchronpunkt nach der Zeit T_RASYN ein. In der Schließphase S1 erfolgt anschließend ein weiterer linearer Anstieg des Drucks P_K und gleichzeitig die Beendigung des Zündeingriffs. Bis zum Haften der Reibbeläge der zweiten zu schließenden Kupplung am Ende der Schließphase S2 schließt sich eine weitere Druckerhöhung der zweiten Kupplung an. Ab diesem Zeitpunkt wird der maximale Kupplungsdruck P_MAX erreicht und ein neuer Gang NG ist geschaltet.

Die beiden Phasen Lastübernahme LÜ sowie Gradient-Einstellen GE werden auch zusammengefaßt bezeichnet als die Phase der Rampe der Lastübernahme T_RALUE. Während der Gradient-Abbau-Phase GA entspricht der Verlauf des Drucks P_K der Rampe aus der Änderung des dynamischen Moments. Die Schließphase S1 entspricht einer Schließrampe plus einer Rampe aus der Änderung des Motormoments, während der Druckverlauf in der sich daran anschließenden Schließphase S2 ausschließlich der Schließrampe folgt.

## Patentansprüche

1. Verfahren zum Steuern eines von einer Brennkraftmaschine angetriebenen Automatgetriebes, bei dem eine Schaltung von einem ersten in ein zweites Übersetzungsverhältnis als eine Zug-Hochschaltung erfolgt, indem eine erste Kupplung öffnet und eine zweite Kupplung schließt und ein elektronisches Getriebe-Steuergerät über elektromagnetische Ventile den Druckverlauf der ersten und der zweiten Kupplung während des Schaltvorgangs steuert und die Schaltung aus einer Schnellfüll- (SF), einer Füllausgleichs- (FA), einer Lastübernahme- (LÜ), einer Gradient-Einstell- (GE), einer Gleit- (GL), einer Gradient-Abbau- (GA) und einer Schließphase (S) besteht, und innerhalb der Gradient-Einstell- (GE), der Gleit- (GL), der Gradient-Abbau- (GA) und der Schließphasen (S) ein Motoreingriff durch eine Reduzierung des Motormoments (M_MOT) durchgeführt und ein Motoreingriffsfaktor (mdzegs) von dem Getriebe-Steuergerät an ein Motor-Steuergerät der Brennkraftmaschine übertragen wird, **dadurch gekennzeichnet, daß** der Kupplungsdruck (P_K) an der schließenden Kupplung berechnet wird aus dem statischen Motormoment mit Motoreingriff (M_STAT ME), dem dynamischen Motormoment (M_DYN), einem Faktor (F1), einer Wandlerverstärkung (WV) und dem Absolutdruck (P_ABS) und wobei das statische Motormoment mit Motoreingriff (M_STAT ME) berechnet wird als das Produkt aus dem statischen Motormoment (M_STAT) mal der Summe von eins minus dem Motoreingriffsfaktor (mdzegs).

2. Verfahren nach Anspruch 1, **dadurch gekennzeichnet, daß** man den Motoreingriffsfaktor (mdzegs) in der Phase (GE) über der Zeit linear steigert von Null auf den Wert des maximalen Motoreingriffsfaktors (mdzegsomax), in der Phase (GL) im wesentlichen konstant hält und in den Phasen (GA) + (S) reduziert von dem maximalen Motoreingriffsfaktor (mdzegsomax) auf Null.

3. Verfahren nach Anspruch 2, **dadurch gekennzeichnet, daß** man einen maximalen Motoreingriffsfaktor (mdzegsomax) berechnet aus einem maximalen dynamischen Moment (M_DYN), einem statischen Motormoment ohne Motoreingriff (M_STAT) und einem maximal einstellbaren Motorkennfaktor (KF_MDZ MAX).

4. Verfahren nach den Ansprüchen 2 und 3, **dadurch gekennzeichnet, daß** der maximale Motoreingriffsfaktor (mdzegsomax) berechnet wird als das Verhältnis aus dem dynamischen Motormoment (M_DYN) zu dem statischen Motormoment (M_STAT) für den Fall, daß dieser Wert kleiner ist als der maximal einstellbare Motorkennfaktor (KF_MDZ MAX), falls dieser errechnete Wert größer ist als der maximal einstellbare Motorkennfaktor (KF_MDZ MAX), entspricht der maximale Motoreingriffsfaktor (mdzegsomax) dem maximal einstellbaren Motorkennfaktor (KF_MDZ MAX).

5. Verfahren nach einem der vorhergehenden Ansprüche, **dadurch gekennzeichnet, daß** der Kupplungsdruck (P_K) zu Beginn des Motoreingriffs, nämlich zu Beginn der Phase (GE), berechnet wird als die Summe aus dem Absolutdruck (P_ABS) und dem statischen Motordruck (P_M STAT), wobei dieser sich berechnet als Produkt aus dem Faktor (F1) mal dem statischen Motormoment (M_STAT) mal der Wandlerverstärkung (WV).

6. Verfahren nach einem der vorhergehenden Ansprüche, **dadurch gekennzeichnet, daß** der Kupplungsdruck (P_K) während der Gleitphase (GL) berechnet wird als die Summe aus dem Absolutdruck (P_ABS) und dem Druck (P_M STAT ME) des statischen Motormoments mit Motoreingriff und dem Druck (P_M DYN) des dynamischen Motormoments, wobei (P_M DYN) berechnet wird als Produkt aus dem Faktor (F1) mal der Wandlerverstärkung (WV) mal dem dynamischen Motormoment (M_DYN).

7. Verfahren nach einem der vorhergehenden Ansprüche, **dadurch gekennzeichnet, daß** die zweite. Kupplung in der Zug-Hochschaltung während der Schnellfüllphase (SF) mit hohem Druck beaufschlagt, in der Füllausgleichsphase (FA) auf einem niederen Druckniveau (P_ABS) befüllt wird und in der Lastübernahmephase (LÜ) der Druck der zweiten Kupplung auf einen Endwert (P_ABS + P_M STAT) erhöht und in der Gradient-Einstellphase (GE) der Druck vom Endwert (P_ABS + P_M STAT) auf einen Endwert (P_ABS + P_M STAT ME + P_M DYN) erhöht wird, in der Gleitphase (GL) der Druck konstant bleibt, bis an dieser ein Vorsynchronpunkt (VSYNC) erkannt wird, in der Gradient-Abbauphase (GA) der Druck der zweiten Kupplung auf einen Endwert (P_ABS + P_M STAT) verringert wird und mit Erreichen des Endwertes die Schließphase (S1, S2) beginnt.

8. Verfahren nach einem der vorhergehenden Ansprüche, **dadurch gekennzeichnet, daß** man den Beginn des Motoreingriffs zur Synchronisierung mit dem Schaltdruckaufbau in den Phasen (GE) und (GL) über eine Zeitstufe verzögert, wenn die Reaktion des Motoreingriffs schneller ist als die Reaktion auf Druckvorgaben.

9. Verfahren nach einem der vorhergehenden Ansprüche, **dadurch gekennzeichnet, daß** man den Beginn des Schaltdruckaufbaus zur Synchronisierung mit dem Motoreingriff in den Phasen (GE) und (GL) über eine Zeitstufe verzögert, wenn die Reaktion des Motoreingriffs langsamer ist als die Reaktion auf Druckvorgaben.

10. Verfahren nach einem der vorhergehenden Ansprüche, **dadurch gekennzeichnet, daß** das dynamische Motormoment (M_DYN) während der Gradient-Einstellphase (GE) von Null auf 100 % gesteigert wird, in der Gleitphase (GL) bei 100 % verbleibt und in der Gradient-Abbauphase (GA) von 100 % auf Null reduziert wird.

11. Verfahren nach einem der vorhergehenden Ansprüche, **dadurch gekennzeichnet, daß** der Motoreingriff nur aktiviert wird, wenn die Motordrehzahl einen vorgebbaren Wert überschreitet.

12. Verfahren nach einem der vorhergehenden Ansprüche, **dadurch gekennzeichnet, daß** der maximal mögliche Motoreingriffsfaktor (mdzegsomax) in einem Kennfeld in Abhängigkeit von Betriebsparametern, wie z. B. Motordrehzahl, Laststellung oder Einspritzmenge oder Motormoment oder Luftmasse, abgespeichert ist.

13. Verfahren nach einem der vorhergehenden Ansprüche, **dadurch gekennzeichnet, daß** der maximal einstellbare Motorkennfaktor (KF_MDZ MAX) vom Motor-Steuergerät aktuell rückgemeldet wird an das Getriebe-Steuergerät.

## Claims

1. Method for controlling an automatic transmission driven by an internal combustion engine. Shifting from a first transmission ratio to a second transmission ratio occurs in the form of a pull upshift. A first coupling opens and a second coupling closes. An electronic transmission control device controls the pressure characteristics of said first and second couplings during the shifting operation by means of electromagnetic valves. The shifting operation consists of a rapid filling phase (SF), a filling equalization phase (FA), a load transfer phase (LÜ), a gradient-setting phase (GE), a sliding phase (GL), a gradient-reduction phase (GA) and a closing phase (S). Within the gradient-setting (GE), sliding (GL), gradient-reduction (GA) and closing phases (S) engine intervention is effected by the reduction of the engine torque (M_MOT) and an engine intervention factor (mdzegs) is transmitted from the transmission control device to an engine control device of the internal combustion engine. The method is **characterized in that** the clutch pressure (P_K) at the closing clutch is calculated on the basis of the static engine torque with engine intervention (M_STAT ME), the dynamic engine torque (M_DYN), a factor (F1), a converter amplification (WV) and the absolute pressure (P_ABS), whereby the static engine torque with engine intervention (M_STAT ME) is the product of the static engine torque (M_STAT) times the sum of one minus the engine intervention factor (mdzegs).

2. Method according to claim 1, **characterized in that** the engine intervention factor (mdzegs) is linearly increased during phase (GE) from zero to the maximum value of the engine intervention factor (mdzegsomax), while it is essentially kept constant during phase (GL) and in phases (GA)+(S) is reduced from the maximum value of the engine intervention factor (mdzegsomax) to zero.

3. Method according to claim 2, **characterized in that** a maximum engine intervention factor (mdzegsomax) is calculated from a maximum dynamic torque (M_DYN), a static engine torque without engine intervention (M_STAT) and a maximum adjustable engine characteristic factor (KF_MDZ_MAX).

4. Method according to claims 2 and 3, **characterized in that** the maximum engine intervention factor (mdzegsomax) is the ratio between the dynamic engine torque (M_DYN) and the static engine torque (M_STAT) in the case of this value being smaller than the maximum adjustable engine characteristic factor (KF_MDZ_MAX). If this calculated value exceeds the maximum adjustable value of the engine characteristic factor (KF_MDZ_MAX), then the maximum engine intervention factor (mdzegsomax) corresponds to the maximum adjustable value of the engine characteristic factor (KF_MDZ_MAX).

5. Method according to one of the preceding claims, **characterized in that** the clutch pressure (P_K) at the start of engine intervention, i.e. at the beginning of phase (GE), is the sum of the absolute pressure (P_ABS) and the static engine pressure (P_M STAT), whereby this is the result of factor ((Fl) multiplied by the static engine torque (M_STAT) multiplied by the converter amplification (WV).

6. Method according to one of the preceding claims, **characterized in that** the clutch pressure (P_K) is calculated during the sliding phase (GL) as the sum of the absolute pressure (P_ABS) and the pressure (P_M STAT ME) of the static engine torque with engine intervention and the pressure (P_M DYN) of the dynamic engine torque, whereby (P_M DYN) is the result of factor (F1) the converter amplification (WV) multiplied by the engine dynamic torque (M_DYN).

7. Method according to one of the preceding claims, **characterized in that** the second clutch in the pull upshift during the rapid filling phase (SF) is actuated at a high pressure level, during the filling equalization phase (FA) is filled at a lower pressure level (P_ABS)and during the load transfer phase (LÜ)the pressure of the second clutch is raised to a final value (P_ABS + P_M STAT) and during the gradient-setting phase (GE) the pressure of the final value (P_ABS + P_M STAT) is raised a final value (P_ABS + P_M STAT ME + P_M DYN); during the sliding phase (GL)pressure remains constant until a pre-synchronous point (VSYNC) is identified. During the gradient-reducing phase (GA) the pressure of the second clutch is reduced to a final value (A_ABS + P_M STAT) and the closing phase (S1, S2) starts when this final value is reached.

8. Method according to one of the preceding claims, **characterized in that** engine intervention for synchronization with control pressure buildup during the phases (GE) and (GL)is delayed by a time stage, if engine intervention response is faster than the response to specified pressure values.

9. Method according to one of the preceding claims, **characterized in that** the control pressure buildup for synchronization with the engine intervention during the phases (GE) and (GL) is delayed by a time stage, if engine intervention response is slower than the response to specified pressure values.

10. Method according to one of the preceding claims, **characterized in that** the dynamic engine torque (M_DYN) during the gradient-setting phase (GE)) is increased from zero to 100% , remains at 100% during the sliding phase (GL) and is reduced from 100% to zero during the gradient-reduction phase (GA).

11. Method according to one of the preceding claims, **characterized in that** engine intervention is activated only if engine speed exceeds a preset value.

12. Method according to one of the preceding claims, **characterized in that** the maximum possible engine intervention factor (mdzegsomax) of a characteristic field is saved in relation to operating parameters, such as engine speed, load position or injection quantity or engine torque or air mass.

13. Method according to one the preceding claims, **characterized in that** the current maximum adjusting engine characteristic factor (KF_MDZ_MAX) is fed back from the engine control unit to the transmission control unit.

## Revendications

1. Méthode de commande d'une boîte de vitesses automatique entraînée par un moteur à combustion interne, où le passage d'un premier rapport de démultiplication à un deuxième rapport de démultiplication s'effectue sous forme d'un passage montant en tirage, un premier embrayage s'ouvrant et un deuxième embrayage se fermant et un boîtier de commande électronique de la boîte de vitesses pilotant, par l'intermédiaire de valves électromagnétiques, la loi de pression du premier et du deuxième embrayage pendant le processus de passage de vitesse, et où le processus de changement de vitesse est composé d'une phase de remplissage rapide (SF), d'une phase de compensation du remplissage (FA), d'une phase de transfert de la charge (LÜ), d'une phase de régulation du gradient (GE), d'une phase de patinage (GL), d'une phase de réduction du gradient (GA) et d'une phase de fermeture (S), et où pendant la phase de régulation du gradient (GE), la phase de patinage (GL), la phase de réduction du gradient (GA) et la phase de fermeture (S) a lieu une intervention moteur par estompage de couple moteur (M_MOT), un facteur d'intervention moteur (mdzegs) étant transmis du boîtier de commande électronique de la boîte de vitesses au calculateur du moteur à combustion interne, **caractérisée en ce que** la pression d'embrayage (P_K) au niveau de l'embrayage se fermant est calculée à partir du couple moteur statique avec estompage de couple (M_STAT ME), le couple moteur dynamique (M_DYN), un facteur (F1), une amplification du convertisseur (WV) et la pression absolue (P_ABS) et **en ce que** le couple moteur statique avec estompage de couple (M_STAT ME) est calculé en tant que produit du couple moteur statique (M_STAT) et de la somme de 1 moins le facteur d'estompage de couple (mdzegs).

2. Méthode selon la revendication 1, **caractérisée en ce que** le facteur d'estompage de couple (mdzegs) est incrémenté dans la phase (GE) de façon linéaire dans le temps à partir de 0 jusqu'à la valeur maximale du facteur d'estompage de couple (mdzegsomax), **en ce qu'**il est maintenu dans la phase (GL) essentiellement constant et **en ce que** dans les phases (GA) + (S) celui-ci est réduit jusqu'à 0 à partir du facteur d'estompage de couple maximal (mdzegsomax).

3. Méthode selon la revendication 2, **caractérisée en ce que** un facteur d'estompage de couple maximal (mdzegsomax) est calculé à partir d'un couple dynamique maximal (M_DYN), d'un couple moteur statique sans estompage de couple (M_STAT) et d'un facteur caractéristique moteur max. réglable (KF_MDZ MAX).

4. Méthode selon une des revendications 2 et 3, **caractérisée en ce que** le facteur d'estompage de couple maximal (mdzegsomax) est calculé en tant que rapport entre le couple moteur dynamique (M_DYN) et le couple moteur statique (M_STAT) au cas où cette valeur serait inférieure au facteur caractéristique du moteur max. réglable (KF_MDZ MAX). Si cette valeur calculée est supérieure au facteur caractéristique du moteur max. réglable (KF_MDZ MAX), le facteur d'estompage de couple max. (mdzegsomax) correspond au facteur caractéristique du moteur max. réglable (KF_MDZ MAX).

5. Méthode selon une des revendications précédentes, **caractérisée en ce que** la pression d'embrayage (P_K) au début de l'estompage de couple, c'est-à-dire au début de la phase (GE), est calculée en tant que somme de la pression absolue (P_ABS) et la pression moteur statique (P_M STAT), sachant que celle-ci est calculée à partir du facteur (F1) multiplié par le couple moteur statique (M_STAT) multiplié par l'amplification du convertisseur (WV).

6. Méthode selon une des revendications précédentes, **caractérisée en ce que** la préssion d'embrayage (P_K) pendant la phase de patinage (GL) est calculée en tant que somme de la pression absolue (P_ABS) et la pression (P_M STAT ME) du couple moteur statique avec estompage de couple et la pression (P_M DYN) du couple moteur dynamique, sachant que (P_M DYN) est calculée en tant que produit du facteur (F1) et de l'amplification du convertisseur (WV) et du couple moteur dynamique (M_DYN).

7. Méthode selon une des revendications précédentes, **caractérisée en ce que** le deuxième embrayage est pressurisé lors du passage montant en tirage pendant la phase de remplissage rapide (SF) avec une pression élevée, **en ce que** pendant la phase de compensation de remplissage (FA) celui-ci est remplit à un niveau de pression bas (P_ABS), et **en ce que** dans la phase de transfert de charge (LÜ) la pression du deuxième embrayage est augmentée jusqu'à atteindre une valeur finale (P_ABS + P_M STAT), et **en ce que** dans la phase de régulation du gradient (GE) la pression de la valeur finale (P_ABS + P_M STAT) est augmentée à une valeur finale (P_ABS + P_M STAT ME + P_M DYN), **en ce que** dans la phase de patinage (GL) la pression reste constante jusqu'à ce que un point de présynchronisation (VSYNC) est reconnu, **en ce que** dans la phase de réduction du gradient (GA) la pression du deuxième embrayage est réduite à une valeur finale (P_ABS + P_M STAT) et **en ce que** au moment où la valeur finale est atteinte est démarrée la phase de fermeture (S1, S2).

8. Méthode selon une des revendications précédentes, **caractérisée en ce que** le début de l'estompage de couple pour la synchronisation est retardé, lors de l'établissement de la pression de changement de vitesse dans les phases (GE) et (GL), par l'intermédiaire d'un étage de temporisation, si la réaction de l'estompage de couple est plus rapide que la réaction à la consigne de pression.

9. Méthode selon une des revendications précédentes, **caractérisée en ce que** le début de l'établissement de la pression pour la synchronisation avec l'estompage de couple dans les phases (GE) et (GL) est retardé par l'intermédiaire d'un étage de temporisation, si la réaction de l'estompage de couple est plus lente que la réaction à la consigne de pression.

10. Méthode selon une des revendications précédentes, **caractérisée en ce que** le couple moteur dynamique (M_DYN) est incrémenté pendant la phase de régulation du gradient (GE) de 0% jusqu'à 100%, **en ce qu'**il reste à 100% pendant la phase de patinage (GL) et **en ce qu'**il est réduit dans la phase de réduction du gradient à partir de 100% jusqu'à 0 %.

11. Méthode selon une des revendications précédentes, **caractérisée en ce que** l'estompage de couple n'est déclenché que si le régime moteur dépasse une valeur prédéfinie.

12. Méthode selon une des revendications précédentes, **caractérisée en ce que** le facteur d'estompage de couple max. possible (mdzegsomax) est enregistré dans un champ caractéristique en fonction des paramètres de fonctionnement comme par exemple le régime moteur, la position de charge ou la quantité injectée ou le couple moteur ou la masse d'air.

13. Méthode selon une des revendications précédentes, **caractérisée en ce que** le facteur caractéristique du moteur max. réglable (KF_MDZ MAX) et actuel est transmis du calculateur moteur au calculateur de la boîte de vitesses.
